## Europäisches Patentamt

## European Patent Office

## Office européen des brevets

(11) Veröffentlichungsnummer: **0 060 936**

**A2**

(12) # EUROPÄISCHE PATENTANMELDUNG

(21) Anmeldenummer: **81110068.4**

(22) Anmeldetag: **02.12.81**

(51) Int. Cl.³: **F 02 M 3/02**

(30) Priorität: 06.12.80 DE 3046097
17.12.80 DE 3047454
14.01.81 DE 3100829

(43) Veröffentlichungstag der Anmeldung:
29.09.82 Patentblatt 82/39

(84) Benannte Vertragsstaaten:
AT CH DE FR GB IT LI SE

(71) Anmelder: **Bechem, Hannelore**
**Tiefendorfer Strasse 87**
**D-5800 Hagen 1-Berchum(DE)**

(72) Erfinder: **Bechem, Ulrich Wilhelm**
**Tiefendorfer Strasse 87**
**D-5800 Hagen 1-Berchum(DE)**

(72) Erfinder: **Bechem, Klaus**
**Tiefendorfer Strasse 87**
**D-5800 Hagen 1-Berchum(DE)**

(54) Schubabschaltung mit integrierter Stop/Start-Vorrichtung für Kraftfahrzeuge.

(57) Die erfindungsgemäße Schubabschaltung mit selbständiger Stop-Vorrichtung ist dadurch gekennzeichnet, daß am Gaspedal, –gestänge, der Drosselklappe oder dergl. ein Zug-/Druckschalter oder dergl. installiert wird in Kombination mit dem gleichen oder einem zweiten Zug–/Druckschalter oder dergl., der mit der Kupplung gekoppelt wird und somit beim Betätigen des Gaspedals und/oder der Kupplung die Leerlauftreibstoffzurfuhr öffnet, bzw. bei Nichtbetätigen schließt.

Ein Verfahrenspatent wird beantragt, das jeweilige Abstellen des Motors durch Nichtberühren/Nichtbetätigen des Kupplungs– und Gaspedals erfolgen zu lassen.

Die Schubabschaltung kann außerdem über ein Relais dazu verwendet werden, im Schiebebetrieb die Lichmaschine mit der Batterie zu koppeln.

Die Startanlage ist dadurch gekennzeichnet, daß beim Starten des Motors ein Relais zwischengeschaltet wird, das durch D-Plus der Lichtmaschine gesteuert wird, um ein Anlassen bei Leerlaufdrehzahlen oder darüber zu verhindern.

Ein Kombinationspatent wird beansprucht für die Verwendung von Stop/Start mit der erfindungsgemäßen Schubabschaltung, sowie eine Anzeige für die eingesparte Treibstoffmenge in Litern durch Stop/Start und Schubabschaltung.

.ennelore Bechem

5000 Essen 1-Burchum, 25.Nov.198
diefendorfer Str. 67

-1-

Patentanmeldung "Schubabschaltung mit integrierter stop/Start-
Vorrichtung für Kraftfahrzeuge
Zusammengefaßte Patentanmeldungen, Deutsches Patentamt München,
Nr. P 30 46 097.0 vom  6.12.1980 mit Gebrauchsmuster-Hilfsahmeldung
Nr. G 80 32 559.3
Nr. P 30 47 454.5 vom 17.12.1980 mit Nr. G 80 33,479.8
Nr. P 31 00 829.1 vom 14. 01.1981 mit Nr. G 81 00 591.1

Bekannt sind Schubabschaltungen, z. B. bei Einspritzmotoren
eines größeren Automobilherstellers. Bekannt sind auch Stop/-
Start-Vorrichtungen bzw. -Erleichterungen, auch Stop and Go
genannt.

Schubabschaltungen sperren die für den Leerlauf erforderliche
Treibstoffmenge im Schub oder Schiebebetrieb bei Kraftfahrzeugen.

Stop/Start-Vorrichtungen dienen dazu, an Ampeln, Eisenbahnübergängen und bei sonstigen Haltevorgängen den Motor vereinfacht, d. h. nicht über den Zündschlüssel, abzustellen
und wieder zu starten.

Das erfindungsgemäße System ist die Kombination einer besonders einfachen Schubabschaltung mit einer halbautomatischen
Stop/(Start)-Vorrichtung, dadurch gekennzeichnet, daß am
Gaspedal, -gestänge, der Drosselklappe oder dergl. ein Zug/-
Druckschalter oder dergl. installiert wird, der beim, vorzugsweise vor dem Gasgeben, d. h. vor dem Öffnen z. B. der
Drosselklappe, die Leerlauftreibstoffzufuhr öffnet - elektrisch, hydraulisch, pneumatisch, mechanisch oder dergl. -
in Kombination mit einem Zug/Druckschalter oder dergl., der
mit der Kupplung gekoppelt wird und sofort beim Betätigen
oder Berühren der Kupplung die Leerlauftreibstoffzufuhr
öffnet - elektrisch, hydraulisch, pneumatisch, mechanisch
oder dergl.

Vor dem Gasgeben, also vor dem Öffnen der Drosselklappe oder dergl. heißt, daß obiger Zug/Druckschalter oder dergl. vorzugsweise im Bereich des Gaspedals installiert wird, um zu erreichen, daß zunächst der Stromkreis geschlossen und erst dann die Drosselklappe oder dergl. geöffnet wird, z. B. auch durch ein aufgelegtes Zusatzpedal mit einem Druckschalter.

Im Fahrbetrieb stellt der Motor selbständig ab, wenn im Stand bei nicht eingelegtem Gang weder das Gas-, noch das Kupplungspedal betätigt oder berührt werden.

Fahrversuche mit der erfindungsgemäßen Schubabschaltung mit integriertem Stop/(Start)-System haben gezeigt, daß dieses System zwar gewöhnungsbedürftig ist, aber einwandfrei funktioniert und, besonders im Stadt- und Stadtnahverkehr sowie in bergigem Gelände Treibstoffeinsparungen zwischen 10 und 20 % erreicht werden.

Wichtig ist, daß bei Verwendung obiger Schubabschaltung grundsätzlich mit eingekuppeltem Gang gefahren werden muß und im Schub oder Schiebebetrieb weder der rechte Fuß auf dem Gaspedal, noch der linke Fuß auf dem Kupplungspedal ruhen dürfen, um einen Benzinspareffekt durch Sperren der Leerlauftreibstoffzufuhr zu erreichen.

In Kombination mit obigem System wird zum Wiederanlassen vorzugsweise ein Zug- oder Druckschalter am Kupplungspedal so installiert, daß dieser im letzten Bereich des Pedalhubes den Anlasser betätigt.

Diese Anlasserbetätigung über die Kupplung oder eine Drucktaste wird erfindungsgemäß dadurch gegen Betätigen bei laufendem Motor abgesichert, daß ein Relais zwischengeschaltet wird, das mit Minus der Lichtmaschinenkontrollampe bzw. D-Plus der Lichtmaschine verbunden wird und somit ausschließt, den Anlasser bei Leerlaufdrehzahlen und darüber betätigen zu können.

Das Abstellen des Motors kann nicht nur über Nichtberühren des Gas- bzw. Kupplungspedals erfolgen, sondern auch beispielsweise

0060936

über eine rote Stop-Taste als Öffner, die also den Stromkreis oder dergl. der Leerlauftreibstoffzufuhr unterbricht.

Gesonderter Schutz wird dafür beantragt, daß in Kombination
mit obiger Schubabschaltung und Stop/Start-System ein
Relais integriert wird, dadurch gekennzeichnet, daß dieses
Relais jeweils im Schub oder Schiebebetrieb die Lichtmaschine mit der Batterie koppelt und die Batterie hierdurch
zusätzlich und kostenlos geladen wird. Der hierdurch erzielbare Treibstoffeinsparungseffekt ist nicht unerheblich.

Gesonderter Schutz wird ebenfalls dafür beantragt, die Schubabschaltung mit Stop/Start etc. in einem Steuerpult unterzubringen bzw. zu kombinieren, d. h. unter Verwendung eines
grünen Anlaßdruckschalters, eines roten Motorabstell-Drucktastschalters, eines Ein- und Ausschalters für die Schubabschaltung sowie einer Kontrolleuchte hierfür und/oder
einer die Sparzeiten während des Stillstandes und die Sparzeiten durch die Schubabschaltung anzeigenden Uhr, eines
Zählers oder dergl., wobei auch die eingesparte Treibstoffmenge in Litern oder Geldwert angegeben werden kann. Bei
jeweiliger Unterbrechung der Stromzuführung zum Elektromagnetventil oder dergl. durch die Schubabschaltung und/
oder Stop/Start wird hierbei der Stromkreis zur Uhr bzw.
zum Zählwerk oder dergl. geschlossen - vorzugsweise durch
Umsteuerung über ein Relais.

Bei obigen zum Patent angemeldeten Systemen wird vorzugsweise entweder die Stromzufuhr zu den elektromagnetischen
Leerlaufdüsenabsperrventilen oder vorzugsweise die Stromzufuhr zum elektrischen Absperrventil bei Einspritzpumpen
unterbrochen. Nur Fahrzeuge mit Schaltgetriebe sind hiermit auszurüsten.

Patentanspruch 1):                                    0060936

Schubabschaltung mit einer halbautomatischen Stop/(Start)-
Vorrichtung, dadurch gekennzeichnet, daß am Gaspedal,
-gestänge, der Drosselklappe oder dergl. ein Zug/Druckschalter oder dergl. installiert wird, der bei den ersten
Millimetern Gasgeben die Leerlauftreibstoffzufuhr öffnet
– elektrisch, hydraulisch, pneumatisch, mechanisch oder
dergl. – in Kombination mit einem Zug/Druckschalter oder
dergl., der mit der Kupplung gekoppelt wird und sofort
beim Betätigen oder Berühren der Kupplung die Leerlauftreibstoffzufuhr öffnet – elektrisch, hydraulisch, pneumatisch,
mechanisch oder dergl. – bei Verwendung nur eines Zug/Druckschalters oder dergl. für Gas und Kupplung.

Patentanspruch 2):

nach 1) dadurch gekennzeichnet, daß  j e  ein Zug/Druckschalter oder dergl. mit der Kupplung und dem Gas gekoppelt
wird.

Patentanspruch 3):

nach 1) und/oder 2) dadurch gekennzeichnet, daß beim Betätigen des Gaspedals zunächst die Leerlauftreibstoffzufuhr
und erst dann die Drosselklappe oder dergl. geöffnet wird.

Patentanspruch 4):

nach 1) und/oder 2-3) dadurch gekennzeichnet, daß zum
Starten des Motors ein Relais zwischengeschaltet wird, das
mit Minus der Lichtmaschinenkontrollampe bzw. D-Plus
der Lichtmaschine gesteuert wird, um ein Anlassen bei Leerlaufdrehzahlen oder darüber zu verhindern.

Patentanspruch 5):

nach 1) und/oder 2-4) dadurch gekennzeichnet, daß in Kombination ein Relais verwandt wird, das jeweils im Schub oder
Schiebebetrieb die Lichtmaschine mit der Batterie koppelt
und die Batterie hierdurch zusätzlich und kostenlos geladen
wird.

Verfahrens-Patentanspruch 6):

nach 1) und/oder 2-5) dadurch gekennzeichnet, daß das jeweilige Abstellen des Motors durch Nichtbetätigen/-Berühren des
Kupplungs- und Gaspedals erfolgt.